# EUROPÄISCHE PATENTSCHRIFT

(11) **EP 0 492 344 B1**
(45) Veröffentlichungstag und Bekanntmachung des Hinweises auf die Patenterteilung: **26.10.1994**
(21) Anmeldenummer: 91121532.5
(22) Anmeldetag: 16.12.1991
(51) Int. Cl.: B23B 49/00, B23Q 11/00

(54) **Vorrichtung zum Überwachen eines Werkzeuges in automatischen Drehmaschinen**
Monitoring device for a tool in an automatic turning machine
Dispositif pour surveiller un outil dans un tour automatique

(30) Priorität: 22.12.1990 DE 4041660
(43) Veröffentlichungstag der Anmeldung: 01.07.1992
(73) Patentinhaber: Gerwin, Joachim, Dipl.-Wirtsch.-Ing., D-58802 Balve (DE)
(72) Erfinder: Gerwin, Joachim, Dipl.-Wirtsch.-Ing., D-58802 Balve (DE)
(74) Vertreter: von der Heyde, Detlev, Dipl.-Ing. (FH)

(56) Entgegenhaltungen:
- DE-A- 2 709 847
- DE-A- 3 003 431
- DE-U- 8 519 094

## Beschreibung

Die Erfindung betrifft eine Vorrichtung gemäß dem Oberbegriff des Anspruchs 1.

Es sind eine ganze Reihe von Vorschlägen bekannt, die durch Abtasten eines Bohrwerkzeuges mittels einer Tastnadel auf Unversehrtheit oder Bruch untersuchen.

Durch die DE-A-30 03 431 (1) ist eine Abtastvorrichtung bekannt, bei der eine Tastnadel quer zur Längsachse des Bohrwerkzeuges schwenkbar gelagert und durch einen Gleichstrommotor antreibbar ist. Bei unversehrtem Bohrer liegt die Tastnadel seitlich an der Bohrerspitze an. Über einen Winkelgeber wird durch eine elektrische Schaltung erkannt, ob das Werkzeug an der Abtaststelle noch vorhanden ist oder nicht.

Eine weitere Vorrichtung der genannten Art ist durch das DE-U-85 19 094 (2) bekannt, bei der ein Taststab quer zur Werkzeugachse schwenkbar gelagert ist. Der Taststab ist an einem Drehkörper befestigt, der durch einen Motor angetrieben, den Taststab in der Richtung gegen die Spitze des Bohrwerkzeuges bewegt. Ein aus der Winkelstellung des Drehkörpers abgeleiteter Meßwert wird in einen Speicher eingegeben, der bei der nächsten Überprüfung als Vergleichsgröße herangezogen wird.

Bei beiden bekannten Vorrichtungen ist ein separater Motor für die Abtastbewegung notwendig, der eine spezielle Steuerung verlangt. Die aus der Position des jeweiligen Tasters abgeleiteten Meßwerte erfordern eine mit einer Speichereinheit versehenen Auswerteschaltung. Bei (1) muß die Tastnadel einen Mindestschwenkbereich von 90^{o} haben. Durch im Bearbeitungsbereich angeordnete Maschinenteile, Kühlmittelschläuche etc. ist es äußerst schwierig den notwendigen Freiraum zu schaffen. Die bei (2) vorgesehene Abtastung durch Anlegen des Teststabes an die Stirnseite des Bohrers kann nur in Verbindung mit einem drehbaren Werkzeugmagazin außerhalb der Arbeitsposition erfolgen.

Die Aufgabe der Erfindung besteht darin, eine Vorrichtung der genannten Art zu schaffen, die ein Minimum an Platz verlangt, die ohne einen speziellen Antrieb für die Tastnadel auskommt und die nur eine einfache Überwachungsschaltung erfordert.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß die Tastnadelführung radial zur Werkzeugachse erfolgt und daher nur in einer Dimension eine Freigängigkeit fordert, daß die Bewegung der Tastnadel an den mechanischen Zyklus der Drehmaschine angekoppelt ist und daß die Tastnadel gegenüber ihrer Führung axial versteilbar und Teil eines Schalters ist, dessen Schaltzustand zu einem aus dem Maschinenzyklus abgeleiteten Zeitpunkt elektrisch überprüft wird.

Anhand eines Ausführungsbeispiels wird die Erfindung in Verbindung mit den Zeichnungen nachfolgend näher erläutert. Es zeigt:
- Fig.1: in Prinzipdarstellung einen mit einer Überwachungsvorrichtung gemäß des Ausführungsbeispiels der Erfindung ausgerüsteten Mehrspindel-Drehautomaten in Arbeitsposition.
- Fig.1a: die vergrößerte Dastellung eines Details der Fig.1 im Querschnitt.
- Fig.2: die Anordnung der Fig.1 in einer Zwischenposition auf dem Rückweg des Werkzeuges in die Ruhestellung.
- Fig.2a: das Detail der Fig.1a zum Zeitpunkt der Fig.2.
- Fig.3: die Anordnung der Fig.1 in der rückwärtigen Ruhestellung des Werkzeuges.
- Fig.3a: das Detail der Fig.1a zum Zeitpunkt der Fig.3.
- Fig.4: ein Zeitdiagramm der für das Ausführungsbeispiel der Erfindung wichtigsten Funktionen.

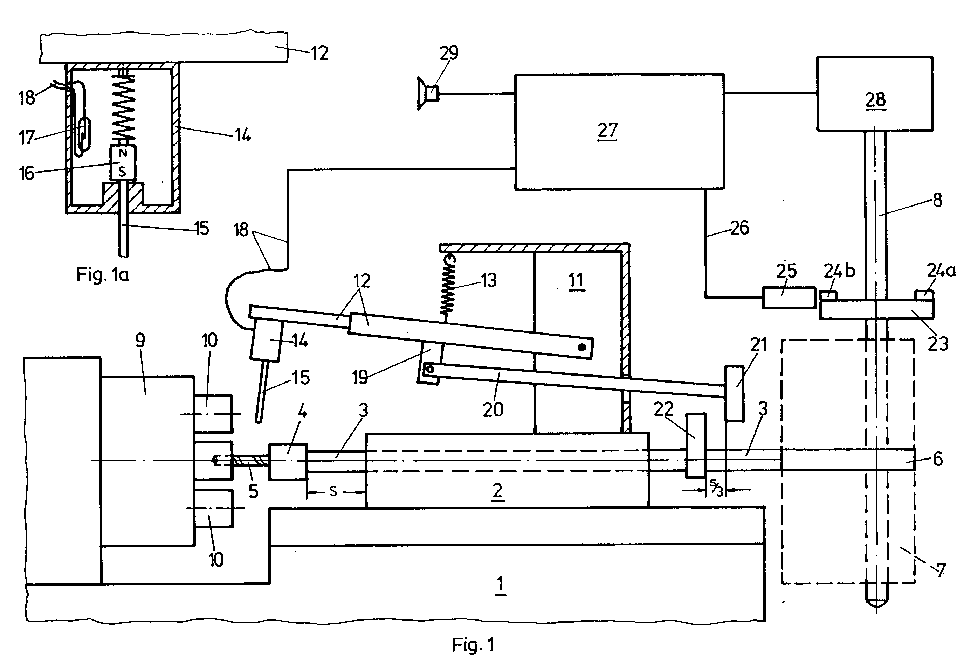

Fig.1 zeigt in einer Prinzipdarstellung eine Mehrspindel-Drehmaschine in Seitenansicht, die mit einer Vorrichtung zur Zustandsüberwachung eines Werkzeuges versehen ist. Das zu überwachende Werkzeug ist ein Bohrer 5, der am Ende einer Pinole 3 in einem Spannkopf 4 befestigt ist. Die Pinole 3 ist in einem auf dem Maschinenbett 1 befestigten Pinolenträger 2 längsverschiebbar gelagert. Die Hubsteuerung erfolgt durch eine Kurvenscheibe 6 in einem den Maschinenzyklus bestimmenden Kurvenscheibensatz 7, der über eine Welle 8 durch einen Motor 28 angetrieben wird. Auf die Darstellung üblicherweise vorhandener Querschlitten wurde aus Gründen der besseren Übersicht verzichtet. Die Darstellung der Fig.1 zeigt den Bohrer 5 nach einem Pinolenhub s in Eingriff mit einem im Spindelkopf 9 eingespannten Werkstück 10. Die Abtastvorrichtung besteht aus einem auf dem Pinolenträger 2 befestigten Gestell 11, das im Querschnitt dargestellt ist. Im Gestell 11 ist ein teleskopartig verlängerbarer Schwenkarm 12 gelagert. Eine an einem Ausleger des Gestelles 11 befestigte Zugfeder 13 zieht den Schwenkarm 12 im unbeeinflußten Zustand in die dargestellte Position. Am freien Ende des Schwenkarmes 12 ist ein Tastschaltergehäuse 14 befestigt. Fig.1a zeigt dieses Gehäuse 14 im Querschnitt. Im Gehäuse 14 ist eine Tastnadel 15 längsverschiebbar geführt, die am Ende einen Schaltmagneten 16 trägt. Eine Zylinderfeder drückt die Tastnadel 15 im unbeeinflußten Zustand in die in Fig.1a gezeigte Anschlaglage. Parallel zum Verstellweg des Magneten 16 ist ein Reed-Kontaktsatz 17 fest im Gehäuse 14 angeordnet. Er bildet mit dem Schaltmagnet 16 einen Reed-Schalter 16/17, der über eine Leitung 18 an eine Überwachungsschaltung 27 angeschlossen ist. Der Schwenkarm 12 steht über ein Koppelglied 19 mit einer Zugstange 20 in Verbindung. Letztere hat am freien Ende einen Mitnehner 22, der in den Bewegungsbereich eines Anschlages 22 auf der Pinole 3 ragt.

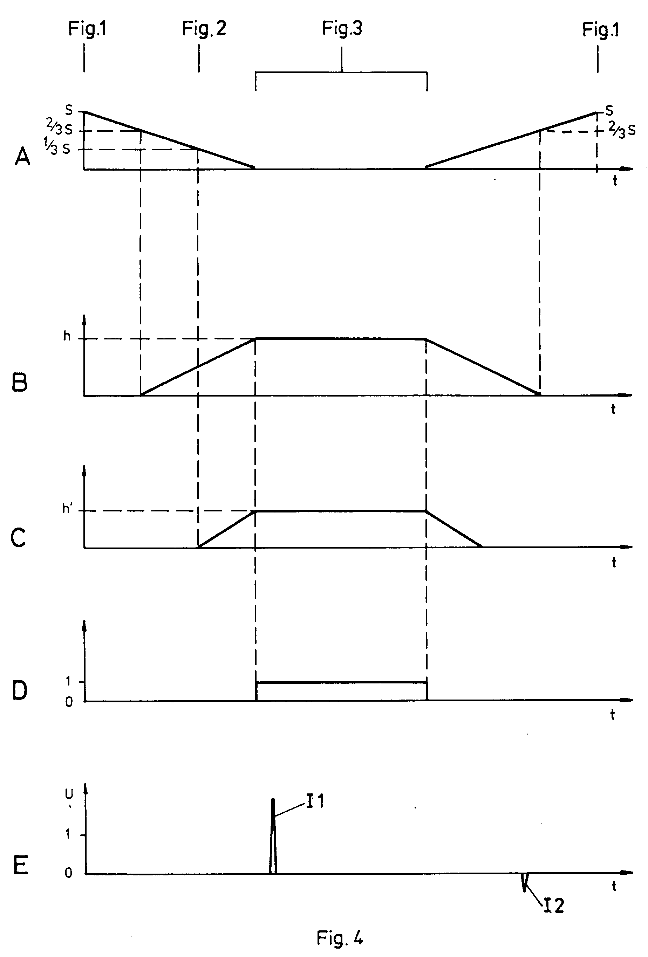

Auf der Welle 8 ist ein Magnetträger 23 befestigt, auf dem diametral Permanentmagnete 24a und 24b befestigt sind. Im Bereich der Umlaufbahn der Magnete 24a und 24b ist ein Wiegand-Draht-Sensor 25 angeordnet, wie er z.B. im Aufsatz "Der Wiegand-Draht, ein neuer magnetischer Sensor" von J. H. Gevatter und W. A. Merl in "Regelungstechnische Praxis", 22. Jahrgang (1980), Heft 3, Seite 81 bis 85 eingehend beschrieben ist. Der Ausgang des Sensors 25 ist über eine Leitung 26 an die Überwachungsschaltung 27 angeschlossen. Der Träger 23 mit den Magneten 24a und 24b ist winkelmäßig so angeordnet, daß der Sensor 25 jeweils kurz nach Beendigung jedes Rückhubes der Pinole 3 und kurz nach Beginn jedes Vorhubes der Pinole 3 (Fig.4,A) einen Nadelimpuls (Fig.4,E) erzeugt. An die Überwachungsschaltung sind ausgangsseitig der Motor 28 und ein akustischer Signalgeber 29 angeschlossen.

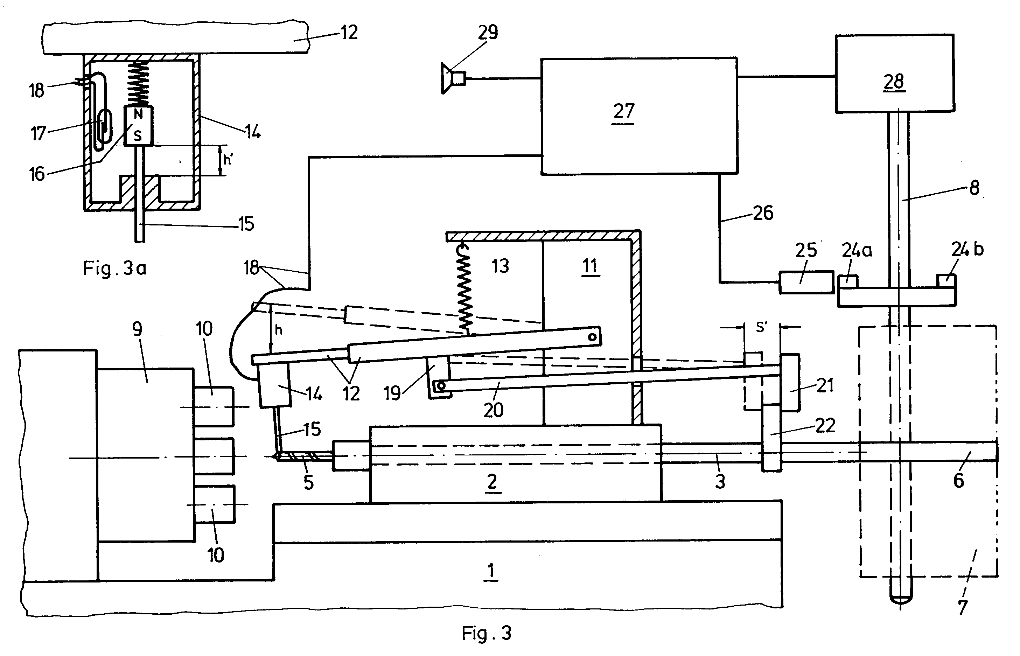

Aus der in Fig.1 gezeigten Arbeitsendposition der Pinole 3 kehrt diese im weiteren Verlauf des Maschinenzyklus durch den vom Motor 28 angetriebenen Kurvenscheibensatz 7 bzw. Kurvenscheibe 6 in die Ruhestellung zurück. Diese Position zeigt Fig.3.

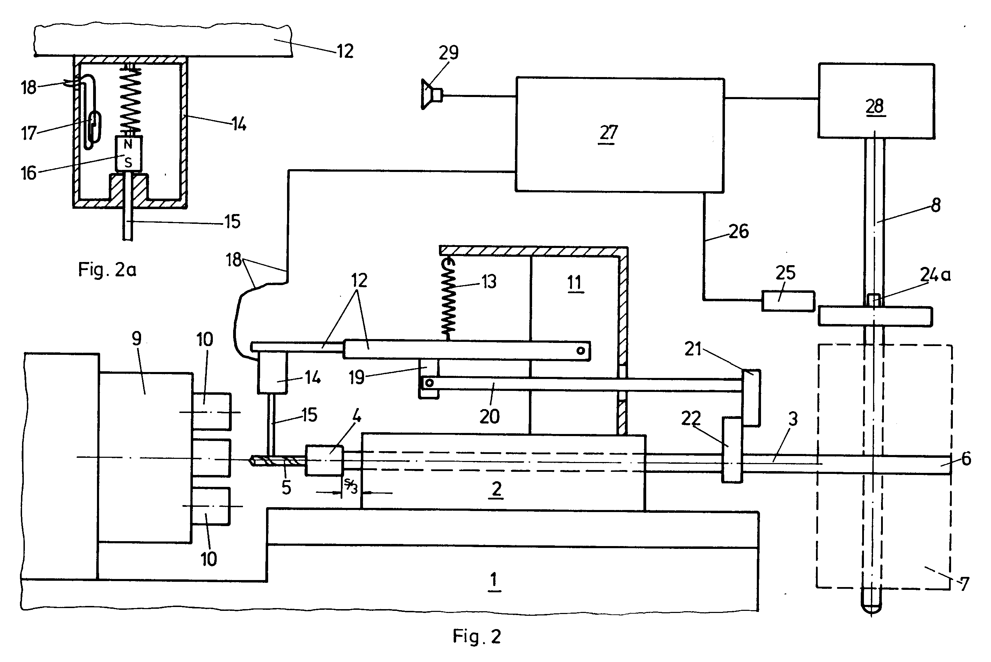

Fig.2 zeigt eine Zwischenposition, in der der Anschlag 22 auf der sich rückläufig bewegenden Pinole 3 die Zugstange 20 über den Mitnehmer 21 nach rechts bewegt. Der angekoppelte Arm 12 wird dadurch im Gegenuhrzeigersinn entgegen der Zugfeder 13 geschwenkt. Zum dargestellten Zeitpunkt, zu dem die Pinole 3 bereits zwei Drittel des Rückhubes zurückgelegt hat, steht die Tastnadel 15 direkt vor einer Berührung mit dem Bohrer 5. Fig.2a zeigt gegenüber der Fig.1a keine Veränderung der Lage der Tastnadel 15.

Fig.3 zeigt die Pinole 3 in der Ruhestellung, in der durch den Anschlag 22 die Zugstange 20 über den Mitnehmer 21 längs der Wegstrecke s' verstellt worden ist. Der Schwenkarm 12 führt dabei einen Abtasthub h aus. Der Überhub gegenüber Fig.2 bewirkt bei einem unversehrten Bohrer 5, daß die Tastnadel 15 entgegen der Zylinderfeder in Längsrichtung um den Hub h' verschoben wird, wie Fig.3a zeigt. In dieser Position befindet sich der Schaltmagnet 16 im Bereich des Reed-Kontaktsatzes 17, der durch das auf ihn einwirkende Magnetfeld geschlossen wird.

Die nach zwei Drittel des Rückhubes der Pinole 3 auf dem Bohrer 5 aufsetzende Tastnadel 15 (Fig.2) gleitet im Verlauf des restlichen Rückhubes der Pinole 3 vom Aufsetzpunkt bis zur Spitze am Bohrer 5 entlang. Erst zu diesem Zeitpunkt kann die Feststellung getroffen werden, ob der Bohrer 5 unversehrt ist oder nicht. Die Tastnadel 15 muß eine Auflagefläche haben, die breiter ist als die Spangänge des Bohrers 5. Die Länge des Schwenkarmes 12 wird jeweils so eingestellt, daß die Testnadel 15 in der Ruhestellung der Pinole 3 genau an der Spitze des Bohrers 5 seitlich anliegt. Bei einer Drehmaschine mit zyklusmäßig wechselnden Werkzeugen unterschiedlicher Länge, z.B. in einem Revolverkopf, kann die Länge des Schwenkarmes 12 durch Abtasten werkzeugspezifischer Anschläge individuell automatisch eingestellt werden.

Anhand der Funktionsdiagramme der Fig.4 wird nachfolgend der Ablauf eines überwachungszyklusses erläutert.
Das Diagramm A zeigt den Bewegungsablauf der Pinole 3, ausgehend von der Position gemäß Fig.1.
Das Diagramm B zeigt den Bewegungsablauf des Schwenkarmes 12. Das Diagramm C zeigt den Bewegungsablauf der Tastnadel 15.
Das Diagramm D zeigt die Schaltstellung des Reed-Kontakt-Satzes 17. (0=Kontakt unterbrochen; 1=Kontakt geschlossen). Das Diagramm E zeigt die zeitliche Folge der durch den Wiegand-Draht-Sensor 25 erzeugten Nadelimpulse. Der Magnet 24a löst den positiven Signalimpuls I1 aus, während der Magnet 24b einen wesentlich kleineren negativen, von der Schaltung 27 unberücksichtigten Setzimpuls I2 auslöst, der nur zur Rückstellung des Sensors 25 dient.

Ausgehend von der Position gemäß Fig.1 setzt nach s/3 (A) die Bewegung des Schwenkarmes 12 ein (B). Zum Zeitpunkt der Fig.2 berührt die Tastnadel 15 der Bohrer 5. Ist dieser unversehrt, wird die Tastnadel 15 um den Hub h' in Längsrichtung verschoben (C). Das Diagramm D zeigt die am Ende des Tastnadelhubes h' durch den Schaltmagneten 16 ausgelöste Kontaktgabe des Reed-Kontaktsatzes 17 in Gehäuse 14 gemäß Fig.3. Im geschlossenen Zustand des Kontaktsatzes 17 steht ein positives Potential in der Überwachungsschaltung 27 an. Kurz danach wird durch den Sensor 25 der ebenfalls positive Signalimpuls I1 erzeugt. Dieser löst in der Überwachungsschaltung 27 einen Vergleich zwischen dem auf der Leitung 18 herrschenden Potential (Kontaktsatz 17 geschlossen: +-Potential) und dem Signalimpuls I1 durch. Gleiche Potentiale sind das Kriterium für einen unversehrten Bohrer 5. Ungleiches Potential wird als Bohrerbruch erkannt, da in diesem Fall die Tastnadel 15 keinen Widerstand gefunden hat und daher der Kontaktsatz 17 nicht betätigt worden ist. In diesem Fall wird durch die Schaltung 27 der Motor 28 augenblicklich abgeschaltet und eine akustische Meldung durch den Signalgeber 29 ausgelöst.

## Patentansprüche

1. Vorrichtung zum überwachen der Unversehrtheit eines Werkzeuges in automatischen Drehmaschinen, bei denen das zu überwachende Werkzeug zur Bearbeitung eines Werkstückes eine Vorschubbewegung ausführt, und das in den Bearbeitungspausen durch eine in einem Abtasthub (h) gegen das Werkzeug geführte Tastnadel (15) überprüft wird, gekennzeichnet durch folgende Merkmale:
- die Tastnadel (15) ist quer zur Mittelachse des Werkzeuges längsverschiebar geführt,
- der Abtasthub (h) ist mit der rückläufigen Bewegung des Werkzeuges in die Ruhestellung gekoppelt,
- die Tastnadel (15) ist gegenüber ihrer Längsführung in Abtastrichtung federnd gelagert,
- im Federhub (h') der Tastnadel (15) ist ein zweiteiliger Näherungsschalter angeordnet, dessen einer Teil mit der Tastnadel (15) verbunden ist.

2. Vorrichtung nach Anspruch 1, dadurch gekennzeichnet, daß ein durch den Maschinenablauf gesteuerter Impulsgeber vorgesehen ist, der in der Zeit der Werzeugabtastphase (Fig.4,D) einen Signalimpuls (Fig.4,E-I1) abgibt, und daß eine elektrische überwachungsschaltung (27) vorgesehen ist, die zum Zeitpunkt der Signalimpulsgabe aus dem Schaltzustand des Näherungsschalters auf den Zustand des Werkzeuges schließt.

3. Vorrichtung nach Anspruch 1, dadurch gekennzeichnet, daß die Führung der Tastnadel (15) ein Schwenkarm (12) mit ortsfestem Drehpunkt ist, an dessen freiem Ende ein Gehäuse (14) befestigt ist, in dem die Tastnadel (15) längsverschiebbar federnd gelagert ist.

4. Vorrichtung nach Anspruch 1, dadurch gekennzeichnet, daß der Näherungsschalter ein Reed-Schalter (16/17) ist, dessen Kontaktsatz (17) im Inneren des Gehäuses (14) befestigt ist und dessen Schaltmagnet (16) fest mit dem in das Gehäuse (14) ragenden Ende der Tastnadel (15) verbunden ist.

5. Vorrichtung nach Anspruch 3, dadurch gekennzeichnet, daß der Schwenkarm (12) in der Länge verstellbar ist.

6. Vorrichtung nach Anspruch 1, dadurch gekennzeichnet, daß der Schwenkarm (12) über ein Koppelglied (19) mit einer Zugstange (20) verbunden ist, daß die Zugstange (20) durch einen Anschlag (22), der auf dem das Werkzeug längs- oder querbewegenden Maschinenteil (3) angeordnet ist, über eine Wegstrecke (s') mitgenommen wird, die dem Abtasthub (h) des des angelenkten Schwenkarmes (12) entspricht, und daß der Anschlag (22) entsprechend dem gewünschten Abtasthub (h) verstellbar ist.

7. Vorrichtung nach Anspruch 6, dadurch gekennzeichnet, daß der Schwenkarm (12) entgegen der Abtastbewegung unter Federwirkung steht.

8. Vorrichtung nach Anspruch 2 für automatische Drehmaschinen mit mindestens einem den automatischen Ablauf Steuernden Kurvenscheibensatz, dadurch gekennzeichnet, daß der Impulsgeber ein Wiegand-Draht-Sensor (24/25) ist, daß zwei Permanentmagnete (24a, 24b) diametral auf einem Träger (23) befestigt sind und daß der Magnetträger (23) derart auf der Antriebswelle (8) des Kurvenscheibensatzes (7) angeordnet ist, daß der während der Rotation des Kurvenscheibensatzes (7) im Wiegand-Draht-Sensor (25) initiierte positive Impuls (Fig .4, E-I1) in der Abtastphase (Fig.4,D) der Tastnadel (15) liegt.

9. Vorrichtung nach Anspruch 5 für automatische Drehmaschinen mit einem Werkzeug-Revolverkopf, der nach jedem Arbeitsgang im Rückschub um eine Werkzeugposition weitergeschaltet wird, dadurch gekennzeichnet, daß über die Stellung des Revolverkopfes der Schwenkarm (12) automatisch auf die dem jeweils in Arbeitsposition befindlichen Werkzeug entsprechende Länge eingestellt wird.

## Claims

1. A device for monitoring the condition of a tool in automatic lathes in which the tool to be monitored makes a forward movement in order to process the work-piece, and in which the tool is examined in the intervals between processing by a feeler needle (15) held against the tool in a feeler lift (h), characterised by the following features:
- the feeler needle (15) is mounted crossways to the central axis of the tool and can be moved longitudinally,
- the feeler lift (h) is coupled with the backward movement of the tool as it returns to the rest position,
- the feeler needle (15) is mounted on springs against its longitudinal travel in the direction in which it feels,
- a two-piece approach switch is arranged in the spring lift (h') of the feeler needle (15), and one of the pieces is connected with the feeler needle (15).

2. A device along the lines of Claim 1, characterised by a pulse transmitter being provided which is controlled by the motions of the machine and sends a signal pulse (Fig. 4, E-I 1) during the period of time when the tool is being examined (Fig. 4, D), and by being provided with an electrical monitoring circuit (27) which can recognise the state of the tool at the moment when the signal pulse is transmitted from the switching condition of the approach switch.

3. A device along the lines of Claim 1, characterised by the guide for the feeler needle (15) being a swivelling arm (12) mounted on a fixed pivot, and with a housing (14) being mounted on its free end in which the feeler needle (15) is mounted on springs against its longitudinal travel.

4. A device along the lines of Claim 1, characterised by the approach switch being a Reed switch (16/17), the contact set (17) of which is mounted in the interior of the housing (14) and the electro-magnet (16) of which is rigidly connected to the end of the feeler needle (15) which projects into the housing (14).

5. A device along the lines of Claim 3, characterised by the swivel arm (12) being adjustable longitudinally.

6. A device along the lines of Claim 1, characterised by the swivel arm (12) being connected via a coupling link (19) to a draw-bar (20), and by the draw-bar (20) being transported by a stop (22) which is arranged on the part of the machine (3) which moves longitudinally or crossways to the tool along a distance (s') corresponding to the lift (h) of the approaching swivel arm (12), and by the stop (22) being adjustable in accordance with the desired lift (h).

7. A device along the lines of Claim 6, characterised by the swivel arm (12) being subject to the force of a spring against the direction in which it examines the tool.

8. A device along the lines of Claim 2, for automatic lathes with at least one set of curve washers, characterised by the pulse transmitter being a Wiegand wire sensor (24/25) and by two permanent magnets (24a, 24b) being mounted diametrically [opposite one another] on a carrier (23), and by the magnet carrier (23) being arranged on the drive shaft (8) of the curve washer set (7) in such a way that, during the rotation of the curve washer set (7) the positive pulse initiated in the Wiegand wire sensor (25) (Fig. 4, E-I 1) lies in the feeler phase (Fig 4, D) of the feeler needle (15).

9. A device along the lines of Claim 5, for automatic lathes with one tool revolver head which is switched to the next tool position during the rearward movement after each working step, characterised by the length being automatically adjusted by means of the position of the revolver head on the swivel arm (12) to match the length of the tool which is in the working position at that moment.

## Revendications

1. Dispositif permettant de contrôler le caractère intact d'un outil dans des tours automatiques sur lesquels l'outil à contrôler effectue une avance pour usiner une pièce et qui est lui-même contrôlé pendant les pauses d'usinage par un palpeur (15) - ayant la configuration d'une aiguille - guidé en direction de l'outil pendant une course de palpage (h), caractérisé par les critères suivants :
- le palpeur (15) est guidé transversalement à l'axe de l'outil de façon à pouvoir être déplacé dans le sens de la longueur,
- la course de palpage (h) est couplée au mouvement de retour de l'outil se remettant en position repos,
- le palpeur (15) par rapport à son guidage dans le sens de la longueur est suspendu sur ressorts dans le sens du palpage,
- dans la course des ressorts (h') du palpeur (15), on a disposé un détecteur de proximité en deux parties dont l'une est reliée au palpeur (15).

2. Dispositif conforme à la revendication 1, caractérisé par le fait qu'on a prévu un générateur d'impulsions commandé par la marche de la machine lequel fournit pendant la phase de palpage de l'outil (Fig.4,D) un signal sous forme d'impulsion (Fig.4,E-I1), et par le fait qu'on a également prévu un élément électrique de contrôle (27) qui, au moment où l'impulsion est fournie, conclut de l'état de commutation actuel du détecteur de proximité à l'état de l'outil.

3. Dispositif conforme à la revendication 1, caractérisé par le fait que le guidage du palpeur (15) est constitué par un bras pivotant (12) doté d'un pivot fixe, à l'extrémité dégagée duquel on a fixé un boitier (14) dans lequel le palpeur (15) est positionné sur ressorts de sorte à être déplaçable dans le sens de la longueur.

4. Dispositif conforme à la revendication 1, caractérisé par le fait que le détecteur de proximité est un contacteur reed (16/17) dont la rangée de contacts (17) est fixée à l'intérieur du boitier (14) et dont l'aimant de commutation (16) est relié à demeure à l'extrémité du palpeur (15) émergeant dans le boîtier (14).

5. Dispositif conforme à la revendication 3, caractérisé par le fait que le bras pivotant (12) peut être déplacé dans le sens de la longueur.

6. Dispositif conforme à la revendication 1, caractérisé par le fait que le bras pivotant (12) est relié à une tige de traction (20) par un élément de couplage (19), par le fait aussi que ladite tige de traction (20) est entraînée par une butée (22) - disposée sur la pièce machine (3) déplaçant l'outil dans le sens longitudinal ou transversal - sur un parcours (s') correspondant à la course de palpage (h) du bras pivotant (12) articulé et enfin par le fait que la butée (22) peut être déplacée conformément à la course de palpage (h) souhaitée.

7. Dispositif conforme à la revendication 6, caractérisé par le fait que le bras pivotant (12) se trouve sous l'action des ressorts dans le sens contraire au mouvement de palpage.

8. Dispositif conforme à la revendication 2 pour les tours automatiques équipés au moins d'une rangée de cames commandant le déroulement automatique des opérations, caractérisé par le fait que le générateur d'impulsions est un capteur à fils Wiegand (24/25), par le fait aussi que deux aimants permanents (24a, 24b) sont fixés sur un support (23) d'une manière diamétralement opposée et que ce même support magnétique (23) est disposé sur l'arbre d'entraînement (8) de la rangée de cames (7) de telle sorte que l'impulsion positive donnée (Fig.4,E-I1) au cours de la rotation de la rangée de cames (7) dans le capteur à fils Wiegand (25) a lieu dans la phase de palpage (Fig.4,D) du palpeur (15).

9. Dispositif conforme à la revendication 5 pour les tours automatiques dotés d'une tourelle revolver qui, au terme de chaque opération, est transférée d'une position d'outil dans sa course retour, caractérisé par le fait que la position de la tourelle revolver permet de régler automatiquement le bras pivotant (12) à la longueur correspondant à l'outil se trouvant respectivement en position de travail.
